# EUROPÄISCHE PATENTANMELDUNG

(11) **EP 4 173 542 A1**
(43) Veröffentlichungstag der Anmeldung: **03.05.2023**
(21) Anmeldenummer: 22197686.3
(22) Anmeldetag: 26.09.2022
(51) Int. Cl.: A47L 15/42, D06F 39/14, F24C 7/08, F24C 15/02, F24C 15/30, F25D 23/02, F25D 23/10, F25D 29/00, H05B 6/64, H01F 38/14, H02J 50/10

(54) **KÜHLSCHRANK MIT EINER KABELLOSEN ENERGIEÜBERTRAGUNG DURCH KÜCHENFRONT**

(30) Priorität: 27.10.2021 DE 102021127900
(71) Anmelder: Miele & Cie. KG, 33332 Gütersloh (DE)
(72) Erfinder: Schmelter, Stefan, 33330 Gütersloh (DE); Westergerling, Mario, 33330 Gütersloh (DE); Koch, Daniel, 32120 Hiddenhausen (DE)

(57) **Zusammenfassung**

Die Erfindung betrifft ein Einbauhaushaltsgerätesystem (1, 2) mit einem Einbauhaushaltsgerät (1) mit einem Gerätekorpus (10) mit einem Innenraum (11), wobei der Gerätekorpus (10) einen drahtlosen Energiesender (13) aufweist, welcher ausgebildet ist, elektrische Energie drahtlos zu einem separaten Interaktionselement (2) hin auszusenden, und mit einem Geräteverschluss (12), welcher ausgebildet ist, den Innenraum (11) zu verschließen, wobei der Geräteverschluss (12) ausgebildet ist, von einer beweglichen Möbelfront (3) verblendet zu werden, und mit wenigstens dem separaten Interaktionselement (2), welches ausgebildet, mit einem Benutzer zu interagieren, wobei das separate Interaktionselement (2) ferner ausgebildet ist, dem Geräteverschluss (12) abgewandt auf der beweglichen Möbelfront (3), vorzugsweise magnetisch oder stoffschlüssig, besonders vorzugsweise reversibel stoffschlüssig, befestigt zu werden und wobei das separate Interaktionselement (2) ferner ausgebildet ist, die ausgesendete elektrische Energie des drahtlosen Energiesenders (13) des Gerätekorpus (10) drahtlos zu empfangen und hiermit betrieben zu werden.

## Beschreibung

Die Erfindung betrifft zwei Einbauhaushaltsgerätesysteme sowie dessen separate Interaktionselemente und Einbauküchengeräte.

Es sind verschiedene Arten von Haushaltsgeräten und insbesondere von Küchengeräten bekannt, welche sowohl freistehend als auch als Einbaugeräte, d.h. beispielsweise in eine Küchenzeile bzw. in ein Küchenmöbel bzw. in dessen Korpus eingelassen und durch eine bewegliche Front verblendet, verwendet werden können. Dies gilt beispielsweise für Kühlgeräte wie beispielweise für Kühlschränke und Gefrierschränke. In jedem Fall weist das Haushaltsgerät selbst einen Gerätekorpus mit einem Innenraum auf, welcher für die Benutzung mittels einer Tür, einer Klappe oder dergleichen als Geräteverschluss zugänglich aber verschließbar ist. Die Front des Küchenmöbels ist als Verblendung des Haushaltsgeräts teilweise oder vollständig zusammen mit dem Geräteverschluss beweglich, üblicherweise seitlich schwenkbar.

Einbauhaushaltsgeräte, kurz Einbaugeräte, bieten den Vorteil, optisch vom Benutzer nicht als separates Haushaltsgerät wahrgenommen zu werden, was den optischen Eindruck verbessern kann. Entsprechend entspricht die Front als Verblendung den weiteren Haushalts- bzw. Küchenmöbeln, welche das Einbaugerät umgeben, sodass das Einbaugerät bei geschlossenem Geräteverschluss nicht sichtbar ist und somit ein einheitlicher Anblick für den Benutzer entsteht.

Die freistehenden Haushaltsgeräte wie beispielsweise freistehende Kühlschränke haben aktuell Vorteile gegenüber den Einbaugeräten, was digitale Mehrwertdienste angeht. So sind freistehende Kühlschränke bekannt, welche Displays, Lautsprecher und ähnliche smarte Applikationen als Interaktionselemente auf der Außenseite der Kühlschranktür aufweisen. Über diese Applikationen lassen sich zahlreiche Funktionen realisieren, die im Bereich von Kühlschränken so in der Vergangenheit nicht anzutreffen waren. Beispielsweise können Informationen über den Inhalt des Kühlschrank optisch auf dem Display, d.h. auf einer optischen Anzeige, angezeigt und bzw. oder akustisch über den Lautsprecher an den Benutzer ausgegeben werden. Dies kann auch für Eingaben des Benutzers gelten, beispielsweise mittels eines Touch-Displays oder separater Eingabe- bzw. Bedienelemente bzw. mittels eines Mikrophons.

Allerdings sind bisher keine Einbaukühlgeräte bekannt, die diese Technologien ebenfalls beinhalten bzw. anbieten können.

Zum einen liegt dies daran, dass die Küchenfront das Einbaugerät verdeckt, so dass ein Display auf der Außenseite der Tür eines Einbaugeräts wie beispielsweise eines Kühlschranks vom Benutzer nicht gesehen werden könnte bzw. ein Lautsprecher auf der Außenseite der Tür des Kühlschranks akustisch deutlich gedämpft werden würde.

Zum anderen muss ein Display, ein Lautsprecher oder dergleichen mit elektrischer Energie versorgt werden, was bisher kabelgebunden realisiert wird. Somit können Displays, Lautsprecher und dergleichen bei Haushaltsgeräten lediglich dort angeordnet werden, wo auch eine kabelgebundene elektrische Stromversorgung erfolgen kann. Entsprechen scheiden Fronten bzw. Verblendungen bisher als Ort der Verwendung derartiger Interaktionselemente mangels Stromversorgung aus.

Soll somit auch bei einem Einbauhaushaltsgerät ein Interaktionselement wie beispielsweise ein Display, ein Lautsprecher oder dergleichen vorgesehen werden, d.h. sollen Funktionen des Einbaugerätes wie beispielsweise die optische bzw. akustische Ausgabe von Informationen an den Benutzer auch trotz einer Front als Verblendung ermöglicht werden, so bedeutet dies, dass die Möbelfront bzw. Küchenfront für das Anbringen eines Displays, eines Lautsprechers oder dergleichen durchbrochen werden muss, um dem Benutzer den Blick auf das Display bzw. die akustische Wahrnehmung des Lautsprechers zu ermöglichen. Alternativ kann das Interaktionselement in oder außen auf der Front angeordnet werden, was jedoch ebenfalls die entsprechende Bearbeitung der Front erfordern kann, um ein Kabel für die elektrische Energieversorgung sowie für die Datenübertragung durch die Front hindurch zu führen. Alternativ würde der Benutzer ein außen um die Front herum bzw. an der Front entlang entlanggeführtes Kabel im Sichtbereich vorfinden. Beides bedingt optische bzw. nicht reversible Eingriffe an der Möbelfront und ist daher üblicherweise nicht gewollt. Auch würde dies zu einem zusätzlichen Aufwand bei der Montage des Einbaugerätes hinter der Möbelfront am Einsatzort führen.

Die WO 2019/044239 A1 beschreibt einen Kühlschrank mit einem Kühlaggregat zum Kühlen von Luft, mit einem wärmeisolierenden Gehäuse, das einen Innenraum bildet, in dem Produkte gelagert werden, und dessen Innenraum eine Zufuhr von durch das Kühlaggregat gekühlter Luft erhält, mit einer Tür zum Öffnen und Schließen der Öffnung zum Innenraum sowie mit einer Steuereinheit. Darüber hinaus ist in dem wärmeisolierenden Gehäuse eine Stromaufnahmeeinheit einer berührungslosen Stromversorgung angeordnet, so dass eine kabellose elektrische Energieversorgung des Kühlschranks als Ganzes erfolgen kann.

Die WO 2008/071431 A2 beschreibt ein Kühl- und bzw. oder Gefriergerät, insbesondere eine Kühl- und bzw. oder Gefriertruhe, mit einem Korpus und einem relativ zum Korpus bewegbaren Deckel oder einer relativ zum Korpus bewegbaren Tür oder Klappe, der bzw. die eine Scheibe, vorzugsweise eine Glas- oder Kunststoffscheibe, aufweist oder durch diese gebildet wird, sowie mit einer Heizeinrichtung, mittels derer die Scheibe beheizbar ist, wobei Mittel zur Übertragung der für den Betrieb der Heizeinrichtung erforderlichen Leistung vorgesehen sind, die nach dem Prinzip der induktiven Leistungsübertragung arbeiten.

Die EP 1 760 733 A1 beschreibt einen Kühlschrank mit einem oder mehreren beweglichen Elementen, die berührungslos mit Strom versorgt werden, um eine Stromverbrauchsvorrichtung zu aktivieren. Der Kühlschrank umfasst ein Gehäuse, das mit einem primären Stromkreis versehen ist, der an eine Hauptwechselspannungsversorgung angeschlossen ist, und umfasst ein bewegliches Element, das mit dem Gehäuse verbunden werden kann, das mit einem sekundären Stromkreis versehen ist. Der sekundäre Stromkreis wird berührungslos von dem primären Stromkreis gespeist und liefert elektrische Energie an eine stromverbrauchende Vorrichtung. Die drahtlose Energieübertragung erfolgt mittels induktiver Kopplung.

Der Erfindung stellt sich somit das Problem, auch bei Einbauhaushaltsgeräten die Möglichkeit zu schaffen, Interaktionselementen trotz beweglicher Möbelfront zu verwenden. Insbesondere sollen hierbei die Interaktionselemente besonders flexibel genutzt werden können. Insbesondere sollen Beschädigungen und Veränderungen der beweglichen Möbelfront vermieden werden. Dies soll insbesondere für Einbauküchengeräte und ganz besonders für Einbaukühlgeräte erfolgen. In jedem Fall soll dies möglichst einfach, flexibel, kostengünstig, gewichtssparend, bauraumsparend, intuitiv nutzbar und bzw. oder bedienerfreundlich erfolgen. Zumindest soll eine alternative zu bekannten Einbauhaushaltsgeräten geschaffen werden.

Erfindungsgemäß wird dieses Problem durch zwei unterschiedliche Einbauhaushaltsgerätesysteme, durch ein separates Interaktionselement sowie durch ein Einbauküchengerät mit den Merkmalen der unabhängigen Ansprüche gelöst. Vorteilhafte Ausgestaltungen und Weiterbildungen der Erfindung ergeben sich aus den nachfolgenden abhängigen Ansprüchen.

Somit betrifft die Erfindung zum einen ein Einbauhaushaltsgerätesystem mit einem Einbauhaushaltsgerät mit einem Gerätekorpus mit einem Innenraum, wobei der Gerätekorpus einen drahtlosen Energiesender aufweist, welcher ausgebildet ist, elektrische Energie drahtlos zu einem separaten Interaktionselement hin auszusenden, und mit einem Geräteverschluss, welcher ausgebildet ist, den Innenraum zu verschließen, wobei der Geräteverschluss ausgebildet ist, von einer beweglichen Möbelfront verblendet zu werden, und mit wenigstens dem separaten Interaktionselement, welches ausgebildet, mit einem Benutzer zu interagieren, wobei das separate Interaktionselement ferner ausgebildet ist, dem Geräteverschluss abgewandt auf der beweglichen Möbelfront, vorzugsweise magnetisch oder stoffschlüssig, besonders vorzugsweise reversibel stoffschlüssig, befestigt zu werden und wobei das separate Interaktionselement ferner ausgebildet ist, die ausgesendete elektrische Energie des drahtlosen Energiesenders des Gerätekorpus drahtlos zu empfangen und hiermit betrieben zu werden.

Mit anderen Worten wird ein erfindungsgemäßes Einbauhaushaltsgerätesystem betrachtet, welches wenigstens ein Einbauhaushaltsgerät sowie ein räumlich bzw. baulich separates Interaktionselement aufweist, vorzugsweise hieraus besteht. Diese beiden separaten Elemente bzw. Geräte können funktionell zusammenwirken, sodass sie zusammen ein System bilden. Das Einbauhaushaltsgerät kann ein beliebiges technisches und elektrisch betriebenes Gerät sein, welches in einem Haushalt verwendet werden und in einem Möbel des Haushalts eingebaut sowie von einer beweglichen Verblendung bzw. von einer beweglichen Front des Möbels freigegeben und verdeckt werden kann. Die bewegliche Verblendung kann auch als bewegliche Möbelfront bzw. als bewegliche Küchenfront bezeichnet werden. Ein derartiges Einbauhaushaltsgerät kann beispielsweise eine Waschmaschine, ein Waschtrockner, ein Wäschetrockner oder dergleichen und insbesondere ein Küchengerät wie beispielsweise ein Kühlschrank, ein Gefrierschrank, ein Backofen, ein Dampfgarer, eine Mikrowelle, ein Kombigerät aus Backofen, Dampfgarer und bzw. oder Mikrowelle oder dergleichen sein.

In jedem Fall weist das Einbauküchengerät einen Gerätekorpus auf, welcher ein äußeres Gehäuse, Elemente bzw. Komponenten zur Durchführung des bestimmungsgemäßen Gebrauchs des Einbauküchengerätes sowie ein inneres Gehäuse aufweist, welches einen Innenraum bildet, in welchem ein entsprechender Prozess des bestimmungsgemäßen Gebrauchs durchgeführt werden kann. Dieser Innenraum ist nach vorne, d. h. zum Benutzer hin, durch eine Öffnung zugänglich, welche durch einen Geräteverschluss des Einbauhaushaltsgerätes wie beispielsweise eine Tür, eine Klappe oder dergleichen durch dessen Bewegung geöffnet und geschlossen werden kann. Der Geräteverschluss des Einbauhaushaltsgerätes ist dabei vorzugsweise gemeinsam mit der beweglichen Möbelfront beweglich, insbesondere schwenkbar, was um eine horizontale Achse oder um eine vertikale Achse erfolgen kann.

Das Interaktionselement kann ein jegliches Element oder Gerät darstellen, welches mit einer Person als Benutzer interagieren kann. Unter einer Interaktion wird verstanden, dass das Gerät eine Wirkung für bzw. auf den Benutzer ausüben kann, was beispielsweise durch eine optische Ausgabe wie beispielsweise ein Leuchten aber auch eine Anzeige einer Information beispielsweise durch Symbole, Zeichen, Bilder und dergleichen, durch eine akustische Ausgabe wie beispielsweise eines Signals bzw. Tons aber auch mehrerer Töne sowie einer Sprachausgabe und bzw. oder durch eine haptische Ausgabe wie beispielsweise ein Vibrieren erfolgen kann. Unter einer Interaktion wird ferner verstanden, dass der Benutzer alternativ oder zusätzlich eine Wirkung auf das Gerät ausüben kann, was beispielsweise durch eine Berühren, ein Drücken, ein Drehen, ein Kippen und dergleichen eines Bedienelements wie beispielsweise einer Taste, eines Schalters, eines Touchscreens bzw. eines Touch-Displays, eines Drehelements, eines Schiebeelements oder dergleichen ebenso erfolgen kann wie alternativ oder zusätzlich durch eine Spracheingabe. Auch kann eine derartige Interaktion Gesten des Benutzers umfassen, welche von dem Interaktionselement erfasst werden können. Dies kann insbesondere miteinander kombiniert werden. Derartige Funktionen des Interaktionselements bzw. mehrerer Interaktionselemente können auch als digitale Mehrwertdienste angesehen und bezeichnet werden.

Um dabei aus der Sicht des Benutzers das Einbauhaushaltsgerät innerhalb des Möbelkorpus und durch die bewegliche Möbelfront verdeckbar wie bisher bekannt verwenden zu können, aber gleichzeitig dem Benutzer digitale Mehrwertdienste wie bisher nur von freistehenden Haushaltsgeräten bekannt anbieten zu können, wird erfindungsgemäß eine drahtlose Übertragung elektrischer Energie von dem erfindungsgemäßen Einbauhaushaltsgerät an das erfindungsgemäße separate Interaktionselement vorgesehen. Somit kann ein erfindungsgemäßes Einbauhaushaltsgerät wie bisher bekannt im Möbelkorpus montiert und mit der bewegliche Möbelfront versehen werden. Anschließend kann das erfindungsgemäße separate Interaktionselement auf dem beweglichen Möbelfront angeordnet bzw. befestigt werden. Mittels des drahtlosen Energiesenders des Gerätekorpus des Einbauhaushaltsgerätes kann nun drahtlos elektrische Energie zum separaten Interaktionselement hin ausgesendet und dort von einem entsprechenden drahtlosen Energieempfänger gehalten werden. Die erhaltene bzw. empfangene elektrische Energie kann seitens des separaten Interaktionselements zu dessen Betrieb verwendet werden, was je nach Anwendungsfall und Ausgestaltung des Interaktionselements direkt und bzw. oder mittels eines elektrischen Energiespeichers wie beispielsweise eines Kondensator oder eines Akkumulators gepuffert bzw. gespeichert erfolgen kann.

Das Befestigen des separaten Interaktionselements auf der Außenfläche der beweglichen Möbelfront kann durch geeignete mechanische Mittel wie beispielsweise eine horizontale Schiene zum Draufstellen des separaten Interaktionselements, durch geeignete seitliche oder vertikal angeordnete Klammern, durch Rastmechanismen und dergleichen erfolgen. Da derartige mechanische Mittel jedoch eine Bearbeitung der beweglichen Möbelfront bzw. einen Eingriff in die bewegliche Möbelfront erfordern können, was einen entsprechenden Aufwand darstellen und bzw. oder vom Benutzer als optisch störend empfunden werden kann, kann das Befestigen des separaten Interaktionselements auf der Außenfläche der beweglichen Möbelfront vorzugsweise durch geeignete Mittel erfolgen, welche keine Bearbeitung bzw. Veränderung der beweglichen Möbelfront erfordern. Beispielsweise kann das separate Interaktionselement wenigstens einen Permanentmagnet aufweisen, um durch die bewegliche Möbelfront hindurch magnetisch an der Vorderseite des Geräteverschlusses gehalten zu werden, welcher hierzu vollständig oder zumindest abschnittsweise metallisch ausgebildet sein kann. Zusätzlich oder alternativ kann das separate Interaktionselement auch stoffschlüssig mittels Klebemittel und insbesondere stoffschlüssig reversibel mittels eines reversiblen Klebemittels an der Vorderseite der beweglichen Möbelfront gehalten werden.

Erfindungsgemäß kann somit ermöglicht werden, separate Interaktionselemente für digitale Mehrwertdienste inklusive einfacher Beleuchtungen und dergleichen an der Vorderseite der beweglichen Möbelfront eines im Einbaumöbel montierten Einbauhaushaltsgerätes vorzusehen. Dies kann ohne bedeutsame und vorzugsweise ohne jegliche Veränderungen der beweglichen Möbelfront erfolgen, da wenigstens auf elektrische Kabel zur Versorgung des separaten Interaktionselements dank drahtloser Übertragung von elektrischer Energie vollständig verzichtet werden kann. Dies kann auch die Gestaltung des Geräteverschlusses vereinfachen, da die drahtlose Übertragung von elektrischer Energie direkt vom Gerätekorpus zum separaten Interaktionselement hin erfolgen kann.

Gemäß einem Aspekt der Erfindung ist das separate Interaktionselement ausgebildet, senkrecht zur Ebene der beweglichen Möbelfront dem drahtlosen Energiesender des Gerätekorpus direkt gegenüberliegend auf der beweglichen Möbelfront befestigt zu werden. Mit anderen Worten kann das separate Interaktionselement bzw. dessen drahtloser Energieempfänger ausgebildet sein, bei bestimmungsgemäßer Verwendung an der Vorderseite der beweglichen Möbelfront direkt auf den drahtlosen Energiesender des Gerätekorpus ausgerichtet zu sein. Eine entsprechende Positionierung an der Vorderseite der beweglichen Möbelfront kann dem Benutzer bzw. einem Monteur durch entsprechende Informationen der Montageanweisungen vorgegeben werden. So kann beispielsweise der drahtlose Energiesender des Gerätekorpus mit seiner Richtung der Aussendung elektrischer Energie an der oberen Kante des Gerätekorpus und in der Längsrichtung direkt nach vorne ausgerichtet, vorzugsweise in der Querrichtung mittig ausgerichtet, angeordnet sein, sodass das separate Induktionselement bzw. dessen drahtloser Energieempfänger entsprechend auf der Vorderseite der beweglichen Möbelfront an dessen oberer Kante und vorzugsweise dort mittig vom Benutzer bzw. Monteur zu befestigen ist, um die erforderliche direkte drahtlose Energieübertragung zu bewirken. Dies kann eine drahtlose Energieübertragung auf vergleichsweise kurze Distanz, insbesondere im Wesentlichen lediglich durch die Stärke der beweglichen Möbelfront hindurch, ermöglichen, sodass vergleichsweise einfache Techniken der drahtlosen Energieübertragung verwendet werden können. Dies kann den Aufwand, die Kosten und bzw. oder den Bauraumbedarf vergleichsweise gering halten.

Gemäß einem weiteren Aspekt der Erfindung ist das separate Interaktionselement ausgebildet, in der Ebene der beweglichen Möbelfront gegenüber dem drahtlosen Energiesender des Gerätekorpus versetzt auf der beweglichen Möbelfront befestigt zu werden. Somit kann das separate Interaktionselement bzw. dessen drahtloser Energieempfänger alternativ ausgebildet sein, bei bestimmungsgemäßer Verwendung an der Vorderseite der beweglichen Möbelfront in der Ebene der Vorderseite der beweglichen Möbelfront zum drahtlosen Energiesender des Gerätekörpers versetzt und somit gerade nicht diesem direkt gegenüberliegend angeordnet werden zu können, was den Spielraum bzw. die Möglichkeiten zur Positionierung des separaten Interaktionselements entsprechend erhöhen kann. Hierzu kann eine Technik der elektrischen drahtlosen Energieübertragung verwendet werden, welche einen entsprechend größeren Spielraum bietet bzw. über größere Abstände und bzw. oder in einem größeren Winkelbereich wirken kann.

Gemäß einem weiteren Aspekt der Erfindung erfolgt die drahtlose Energieübertragung zwischen dem drahtlosen Energiesender des Gerätekorpus und dem separaten Interaktionselement mittels Induktion, vorzugsweise mittels eines resonanten Schwingkreises. Mittels Induktion kann die zuvor beschriebene drahtlose elektrische Energieübertragung grundsätzlich sehr einfach umgesetzt werden, wobei je nach Verfahren der Induktion unterschiedliche Distanzen und bzw. oder unterschiedliche Winkelbereiche zur drahtlosen elektrischen Energieübertragung ermöglicht werden können. Besonders vorteilhaft kann hierbei die Verwendung der Induktion mittels eines resonanten Schwingkreises sein, wie beispielsweise in der WO 2019/086319 A1 beschrieben, wodurch vergleichsweise große Distanzen und große Winkelbereiche zur drahtlosen elektrischen Energieübertragung ermöglicht werden können.

Gemäß einem weiteren Aspekt der Erfindung weist der Geräteverschluss wenigstens ein Interaktionselement, vorzugsweise eine optische Erfassungseinheit, besonders vorzugsweise wenigstens eine Kamera, auf, welches bei geschlossenem Geräteverschluss auf den Innenraum gerichtet ist, wobei das Interaktionselement des Geräteverschlusses ausgebildet ist, die ausgesendete elektrische Energie des drahtlosen Energiesenders des Gerätekorpus drahtlos zu empfangen und hiermit betrieben zu werden. Auf diese Art und Weise kann zusätzlich ein weiteres integriertes Interaktionselement, welches Bestandteil des Einbauhaushaltsgerätes selbst ist, auf vergleichbare Art und Weise drahtlos elektrisch versorgt und hierdurch betrieben werden. Entsprechend können die Möglichkeiten des Einbauhaushaltsgerätes erweitert werden, indem beispielsweise eine optische Erfassungseinheit insbesondere als Kamera bei geschlossenem Geräteverschluss auf den Innenraum des Einbauhaushaltsgerätes gerichtet werden kann, um den Inhalt des Innenraums optisch zu erfassen. Dies kann beispielsweise bei einem Kühlschrank umgesetzt werden, um den Inhalt des Kühlschranks optisch zu erfassen.

Die vorliegende Erfindung betrifft zum anderen auch ein Einbauhaushaltsgerätesystem mit einem Einbauhaushaltsgerät mit einem Gerätekorpus mit einem Innenraum, wobei der Gerätekorpus einen drahtlosen Energiesender aufweist, welcher ausgebildet ist, elektrische Energie drahtlos zu einem drahtlosen Energieempfänger eines Geräteverschlusses hin auszusenden, mit dem Geräteverschluss, welcher ausgebildet ist, den Innenraum zu verschließen, wobei der Geräteverschluss ausgebildet ist, von einer beweglichen Möbelfront verblendet zu werden, wobei der Geräteverschluss den drahtlosen Energieempfänger aufweist, welcher ausgebildet ist, die ausgesendete elektrische Energie des drahtlosen Energiesenders des Gerätekorpus drahtlos zu empfangen, und wobei der Geräteverschluss einen drahtlosen Energiesender, vorzugsweise mit mehreren Sendeelementen, aufweist, welcher ausgebildet ist, elektrische Energie zu einem separaten Interaktionselement hin drahtlos auszusenden, wobei vorzugsweise der drahtlose Energieempfänger und der drahtlose Energiesender mit einer elektrischen Leitung miteinander verbunden sind, und mit wenigstens dem separaten Interaktionselement, welches ausgebildet, mit einem Benutzer zu interagieren, wobei das separate Interaktionselement ferner ausgebildet ist, dem Geräteverschluss abgewandt auf der beweglichen Möbelfront, vorzugsweise magnetisch oder stoffschlüssig, besonders vorzugsweise reversibel stoffschlüssig, befestigt zu werden und wobei das separate Interaktionselement ferner ausgebildet ist, die ausgesendete elektrische Energie des drahtlosen Energiesenders, vorzugsweise genau eines der Sendeelemente des drahtlosen Energiesenders, des Geräteverschlusses drahtlos zu empfangen und hiermit betrieben zu werden.

In diesem Fall wird erfindungsgemäß elektrische Energie drahtlos zuerst vom Gerätekorpus zum Geräteverschluss und in einem weiteren Schritt vom Geräteverschluss zum separaten Interaktionselement übertragen. Dies kann den Aufwand der drahtlosen elektrischen Energieübertragung reduzieren, weil innerhalb des Geräteverschlusses eine Weiterleitung der erhaltenen bzw. der empfangenen elektrischen Energie beispielsweise mittels elektrischer Leitung erfolgen und somit die Strecke der drahtlosen elektrischen Energieübertragung jeweils verkürzt werden kann. Dies kann auch den Aufwand reduzieren, eine flexible Anordnung des separaten Interaktionselements zu ermöglichen, da diese Position der Vorderseite der beweglichen Möbelfront bzw. mehrere Positionen der Vorderseite der beweglichen Möbelfront mittels elektrischer Zuleitungen erreicht und versorgt werden können. Unabhängig hiervon kann die drahtlos empfangene elektrische Energie innerhalb des Geräteverschlusses auch anderen Elementen bzw. Komponenten des Geräteverschlusses mittels elektrischer Leitungen zur Verfügung gestellt werden, ohne dass diese Elemente bzw. Komponenten zum Empfang von drahtlos übertragener elektrischer Energie ausgebildet sein müssen, wodurch auch deren Aufwand bzw. Kosten sowie Bauraum reduziert werden können.

Dabei mehrere einzelne und funktionell getrennte Sendeelemente des drahtlosen Energiesenders des Geräteverschlusses vorzusehen kann es dem Benutzer ermöglichen, jeweils wenigstens ein separates Interaktionselement pro Sendeelement zu platzieren. Alternativ oder zusätzlich kann auch ein separates Induktionselement wahlweise an unterschiedlichen Sendeelementen platziert und somit an unterschiedlichen Positionen der Vorderseite der beweglichen Möbelfront genutzt werden. Dies kann auch miteinander kombiniert werden. Hierdurch können die Nutzungsmöglichkeiten separater Interaktionselemente für den Benutzer erhöht werden.

Gemäß einem weiteren Aspekt der Erfindung ist das separate Interaktionselement ausgebildet, senkrecht zur Ebene der beweglichen Möbelfront dem drahtlosen Energiesender, vorzugsweise genau einem der Sendeelemente des drahtlosen Energiesenders, des Geräteverschlusses direkt gegenüberliegend auf der beweglichen Möbelfront befestigt zu werden. Hierdurch können auch in diesem Fall die entsprechenden zuvor beschriebenen Aspekte hinsichtlich der drahtlosen elektrischen Energieübertragung zwischen Gerätekorpus und Geräteverschluss angewendet und deren Eigenschaften und Vorteile genutzt werden.

Gemäß einem weiteren Aspekt der Erfindung ist das separate Interaktionselement ausgebildet, in der Ebene der beweglichen Möbelfront gegenüber dem drahtlosen Energiesender des Geräteverschlusses versetzt auf der beweglichen Möbelfront befestigt zu werden. Hierdurch können auch in diesem Fall die entsprechenden zuvor beschriebenen Aspekte hinsichtlich der drahtlosen elektrischen Energieübertragung zwischen Gerätekorpus und Geräteverschluss angewendet und deren Eigenschaften und Vorteile genutzt werden.

Gemäß einem weiteren Aspekt der Erfindung erfolgt die drahtlose Energieübertragung zwischen dem drahtlosen Energiesender des Geräteverschlusses und dem separaten Interaktionselement mittels Induktion, vorzugsweise mittels eines resonanten Schwingkreises. Hierdurch können auch in diesem Fall die entsprechenden zuvor beschriebenen Aspekte hinsichtlich der drahtlosen elektrischen Energieübertragung zwischen Gerätekorpus und Geräteverschluss angewendet und deren Eigenschaften und Vorteile genutzt werden.

Gemäß einem weiteren Aspekt der Erfindung weist der Geräteverschluss wenigstens ein Interaktionselement, vorzugsweise eine optische Erfassungseinheit, besonders vorzugsweise wenigstens eine Kamera, auf, welches bei geschlossenem Geräteverschluss auf den Innenraum gerichtet ist, wobei das Interaktionselement des Geräteverschlusses ausgebildet ist, die ausgesendete elektrische Energie des drahtlosen Energieempfängers des Geräteverschlusses drahtlos zu empfangen und hiermit betrieben zu werden. Hierdurch können auch in diesem Fall die entsprechenden zuvor beschriebenen Aspekte hinsichtlich der drahtlosen elektrischen Energieübertragung zwischen Gerätekorpus und Geräteverschluss angewendet und deren Eigenschaften und Vorteile genutzt werden.

Gemäß einem weiteren Aspekt der Erfindung ist bzw. sind das separate Interaktionselement und bzw. oder das Interaktionselement des Geräteverschlusses ausgebildet, mittels drahtlos empfangener elektrischer Energie ausschließlich bei geschlossenem Geräteverschluss betrieben zu werden. Hierdurch kann physikalisch sichergestellt werden, dass nur bei geschlossenem Geräteverschluss eine drahtlose elektrische Energieübertragung vorliegt und somit bei zumindest teilweise geöffnetem Geräteverschluss das separate Interaktionselement und bzw. oder das Interaktionselement des Geräteverschlusses nicht mehr betrieben werden können. Dies kann eine einfache und sichere Betriebsunterbrechung durch das Öffnen des Geräteverschlusses seitens des Benutzers ermöglichen.

Alternativ ist bzw. sind das separate Interaktionselement und bzw. oder das Interaktionselement des Geräteverschlusses ausgebildet, mittels drahtlos empfangener elektrischer Energie eines elektrischen Energiespeichers, vorzugsweise des separaten Interaktionselements, des Interaktionselements des Geräteverschlusses und bzw. oder des Geräteverschlusses, bei geöffnetem Geräteverschluss betrieben zu werden. Ein entsprechender elektrischer Energiespeicher kann beispielsweise mittels eines Kondensators oder Akkumulators umgesetzt werden. In jedem Fall kann es hierdurch ermöglicht werden, zumindest für einen bestimmten Zeitraum das separate Interaktionselement und bzw. oder das Interaktionselement des Geräteverschlusses weiterhin betreiben zu können, wenn der geschlossene Geräteverschluss vom Benutzer geöffnet wird. Hierdurch können entsprechende Betriebsunterbrechungen durch das Öffnen des Geräteverschlusses seitens des Benutzers verhindert bzw. verzögert werden.

Gemäß einem weiteren Aspekt der Erfindung weist das separate Interaktionselement eine Anzeige, vorzugsweise ein Touch-Display, ein Bedienelement, einen Lautsprecher, ein Mikrophon, ein Leuchtmittel und bzw. oder eine optische Erfassungseinheit, vorzugsweise eine Kamera, auf. Hierdurch können verschiedene Möglichkeiten von Interaktionen bzw. digitalen Mehrwertdiensten für den Benutzer zur Verfügung gestellt werden. Hierbei kann es insbesondere vorteilhaft sein, ein Touch-Display vorzusehen, sodass eine Benutzer sowohl Informationen optisch in vielfältiger und ansprechender Art und Weise angezeigt und gleichzeitig Bedieneingaben ermöglicht werden können.

Gemäß einem weiteren Aspekt der Erfindung sind das separate Interaktionselement und das Einbauhaushaltsgerät ausgebildet, direkt oder indirekt drahtlos miteinander zu kommunizieren. Somit kann in jedem Fall auch hinsichtlich der Datenübertragung zwischen Gerätekorpus bzw. dessen Steuerungseinheit und dem separaten Interaktionselement auf Kabel bzw. Leitungen und dergleichen verzichtet werden, sodass auch diesbezüglich die Vorteile einer drahtlosen Übertragung genutzt werden können. Dies kann dabei direkt zwischen separatem Induktionselement und Einbauhaushaltsgerät durch entsprechende Sender und bzw. oder Empfänger erfolgen, wozu beispielsweise bekannte Technologien der Datenübertragung für kurze Entfernungen wie beispielsweise Bluetooth, WiFi und dergleichen verwendet werden können. Dies kann jedoch auch indirekt über wenigstens einen dazwischengeschalteten Sender und bzw. oder Empfänger erfolgen, welcher beispielsweise ein WLAN-Router eines heimischen drahtlosen Netzwerkes oder ein Mobilfunknetz sein kann. Hierdurch können jeweils die entsprechenden technischen Möglichkeiten genutzt werden.

Die vorliegende Erfindung betrifft auch ein separates Interaktionselement zur Verwendung in einem Einbauhaushaltsgerätesystem wie zuvor beschrieben. Hierdurch kann ein entsprechendes separates Interaktionselement zur Verfügung gestellt werden, um die entsprechenden zuvor beschriebenen Eigenschaften und Vorteile umzusetzen und bei einem erfindungsgemäßen Einbauhaushaltsgerätesystem zu nutzen.

Die vorliegende Erfindung betrifft ferner ein Einbauhaushaltsgerät zur Verwendung in einem Einbauhaushaltsgerätesystem wie zuvor beschrieben. Hierdurch kann ein entsprechendes Einbauhaushaltsgerät zur Verfügung gestellt werden, um die entsprechenden zuvor beschriebenen Eigenschaften und Vorteile umzusetzen und bei einem erfindungsgemäßen Einbauhaushaltsgerätesystem zu nutzen.

Mit anderen Worten kann es als Ziel der vorliegenden Erfindung angesehen werden, Einbauhaushaltsgeräte, insbesondere Einbaukühlgeräte und allgemein Küchengeräte mit vorgehängter Möbelfront bzw. Küchenfront in die Lage zu versetzen, Zubehör wie beispielsweise Displays, Beleuchtung, Lautsprecher, Kameras und dergleichen als separate Interaktionselemente an der Außenseite der Möbelfront mit elektrischer Energie zu versorgen. Eine Kommunikation mit der Elektronik beispielsweise des Kühlschranks kann drahtlos über bekannte Kommunikationswege wie beispielsweise WiFi oder Bluetooth erfolgen.

Zusätzlich oder alternativ kann es als Ziel der vorliegenden Erfindung angesehen werden, bei Einbauhaushaltsgeräten und insbesondere bei Küchengeräten mit Tür und dergleichen die Möglichkeit zu schaffen, in und bzw. oder außerhalb der Tür enthaltene andere Geräte wie beispielsweise Zubehör wie beispielsweise Displays, Beleuchtung, Lautsprecher, Kameras und dergleichen mit Energie zu versorgen, ohne eine direkte Kabelanbindung an diese zu benötigen.

Zusätzlich oder alternativ kann es als Ziel der vorliegenden Erfindung angesehen werden, die Anordnung von Zubehör wie beispielsweise Displays, Beleuchtung, Lautsprecher, Kameras und dergleichen bei Einbauhaushaltsgeräten flexibel zu gestalten bzw. diese frei anordnen zu können. Beispielsweise können reversible Klebestreifen oder Magnete zur Befestigung genutzt werden.

Zusätzlich oder alternativ kann es als Ziel der vorliegenden Erfindung angesehen werden, bei Einbauhaushaltsgeräten physikalisch sicherzustellen, dass Zubehör wie beispielsweise Kameras an der Geräteinnentür bzw. Kühlschrankinnentür nur aktiv sein können, wenn die Tür geschlossen ist, insbesondere weil nur dann eine Energieübertragung überhaupt physikalisch möglich ist.

Erfindungsgemäß kann daher ein Einbauhaushaltsgerät und insbesondere ein Einbauküchengerät, ganz besonders ein Einbaukühlgerät, um eine drahtlose Energieübertragung ergänzt werden, welche insbesondere induktiv oder auch mittels eines resonanten Schwingkreises umgesetzt werden kann. In jedem Fall kann sich am Gerätekorpus ein Sender befinden, welcher durch drahtlose Kopplung elektrische Energie zu einem Empfänger übertragen kann, welcher an der Tür oder Frontplatte des Einbauhaushaltsgeräts angeordnet ist.

Die empfangene Energie kann der Tür und bzw. oder an der Frontplatte des Einbauhaushaltsgeräts genutzt werden, um Zubehör im Gerät und bzw. oder am Gerät mit elektrischer Energie zu versorgen. Des Weiteren kann die empfangene Energie an der Tür und bzw. oder an der Frontplatte des Einbauhaushaltsgeräts nochmals drahtlos mittels einer oder mehrerer zusätzlicher Sender durch eine vorgehängte Küchenfront hindurch nach außerhalb des Einbauhaushaltsgeräts übertragen werden. An der Küchenfront können so entsprechende Empfänger und Verbraucher kabellos und flexibel versorgt und angeordnet werden. Dies können Interaktionselemente wie beispielsweise Displays, Beleuchtung, Lautsprecher, Kameras und dergleichen sein.

Zudem erlaubt die Umsetzung der drahtlosen Energieübertragung das physikalische Abschalten von Verbrauchern bzw. Zubehör wie beispielsweise Kameras, insbesondere in den Innenraum des Einbauhaushaltsgeräts gerichtete Kameras, wenn die Gerätetür geöffnet ist und somit physikalisch keine Energieübertragung stattfinden kann. Entsprechend kann im entgegengesetzten Fall, falls die Versorgung von Verbrauchern auch bei geöffneter Gerätetür gewährleistet werden soll, mit Hilfe von elektrischen Energiepuffern eine ausreichende Energieversorgung der entsprechenden Verbraucher realisiert werden. Zum Beispiel kann so die Beleuchtung der Türabsteller bei geöffneter Tür weiterhin für einen gewissen Zeitraum sichergestellt werden.

Vorteilhaft kann hieran sein, dass Einbauhaushaltsgeräte Zusatzfunktionen bzw. Interaktionselemente wie beispielsweise Displays, Lampen, Ladeschalen und dergleichen insbesondere an der Außenseite der Küchenfront ansteuern und mit Energie versorgen können. Zusatzfunktionen wie beispielsweise Displays, Lampen und dergleichen können zerstörungsfrei jeder Zeit an der Küchenfront des Einbaugerätes befestigt und entfernt werden, d.h. das Einbaugerät sowie das umgebende Möbel bzw. dessen Front bzw. Frontblende muss hierzu nicht umgebaut werden. Updates und Aufrüsten auf neue Technologien werden möglich, da die Einbaugeräte eingebaut bleiben können, um beispielsweise lediglich ein neues Display oder ein neues Feature an der Gerätefront zu realisieren.

Mit der WPT-Technologie der WO 2019/086319 A1 kann vorzugsweise eine verbesserte induktive Kopplung mit zwei resonanten hoch-effizienten Resonanzschwingkreisen ermöglicht werden, die auch große Mengen elektrischer Energie durch die Möbelfront hindurch übertragen kann. Dies kann auch gleichzeitig an mehrere Verbraucher erfolgen.

Mehrere Ausführungsbeispiele der Erfindung sind in den Zeichnungen rein schematisch dargestellt und werden nachfolgend näher beschrieben. Es zeigt
- Figur 1: eine perspektivische Darstellung eines erfindungsgemäßen Einbauhaushaltsgerätesystems gemäß eines ersten Ausführungsbeispiels mit geöffnetem Geräteverschluss eines erfindungsgemäßen Einbauhaushaltsgerätes;
- Figur 2: die Darstellung der Figur 1 mit geschlossenem Geräteverschluss;
- Figur 3: die Darstellung der Figur 2 mit beweglicher Möbelfront und erfindungsgemäßem separaten Interaktionselement;
- Figur 4: eine perspektivische Darstellung eines erfindungsgemäßen Einbauhaushaltsgerätesystem gemäß eines zweiten Ausführungsbeispiels mit geöffnetem Geräteverschluss eines erfindungsgemäßen Einbauhaushaltsgerätes;
- Figur 5: eine Darstellung eines drahtlosen Energiesenders des Geräteverschlusses mit mehreren Sendeelementen; und
- Figur 6: die Darstellung der Figur 5 mit jeweils einem separaten Interaktionselement pro Sendeelement.

Die o.g. Figuren werden in kartesischen Koordinaten betrachtet. Es erstreckt sich eine Längsrichtung X, welche auch als Tiefe X oder als Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann und der Richtung der Schwerkraft entspricht. Die Längsrichtung X und die Querrichtung Y bilden gemeinsam die Horizontale X, Y, welche auch als horizontale Ebene X, Y bezeichnet werden kann.

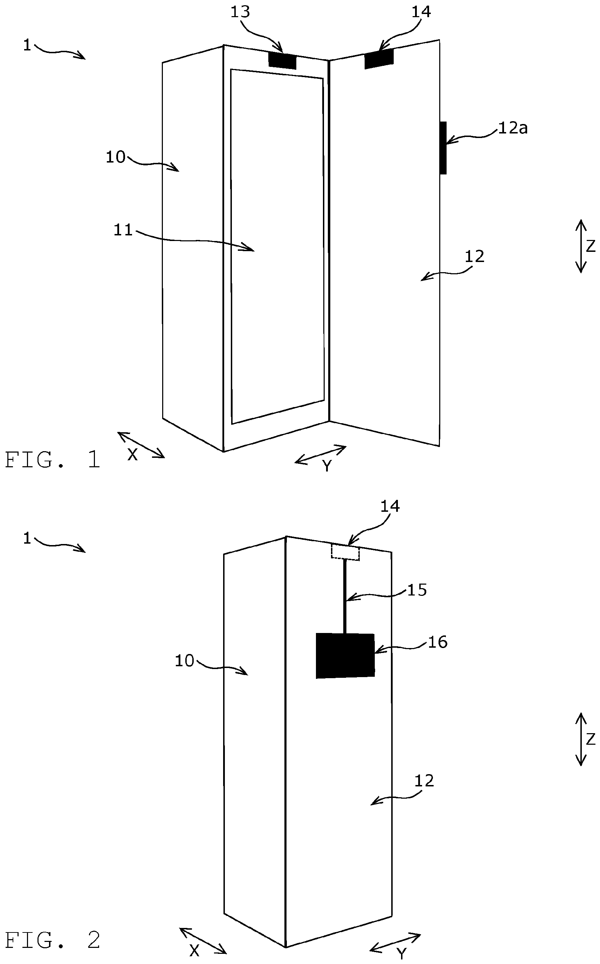

Ein erfindungsgemäßes Einbauhaushaltsgerätesystem 1, 2 gemäß eines ersten Ausführungsbeispiels ist in den Figuren 1 bis 3 dargestellt. Das betrachtete Einbauhaushaltsgerätesystem 1, 2 besteht aus einem Einbauhaushaltsgerät 1, welches als Einbauküchengerät 1 in Form eines Einbauküchengeräts 1 bzw. als Einbaukühlschrank 1 ausgebildet ist, sowie aus einem separaten Interaktionselement 2.

Der Einbaukühlschrank 1 weist einen Gerätekorpus 10 auf, welcher einen Innenraum 11 bis auf eine Öffnung (nicht bezeichnet) umschließt. Der Innenraum 11 kann mittels eines Geräteverschlusses 12 in Form einer Gerätetür 12 des Einbaukühlschranks 1 von einem Benutzer geöffnet und geschlossen werden. Hierzu kann die Gerätetür 12 vom Benutzer mittels eines Verschlussgriffs 12a als Türgriff 12a betätigt werden.

Der Gerätekorpus 10 weist einen drahtlosen Energiesender 13 auf, welcher an der Oberkante (nicht bezeichnet) des Gerätekorpus 10 in der Längsrichtung X nach vorne zum Benutzer hin sowie in der Querrichtung Y mittig ausgerichtet angeordnet ist. Dem drahtlosen Energiesender 13 des Gerätekorpus 10 entlang der Längsrichtung X direkt gegenüberliegend weist die Gerätetür 12 einen drahtlosen Energieempfänger 14 auf, welcher ferner zum drahtlosen Energiesender 13 des Gerätekorpus 10 hin ausgerichtet ist. Der drahtlose Energiesender 13 des Gerätekorpus 10 und der drahtlose Energieempfänger 14 der Gerätetür 12 sind dazu ausgebildet, auf die kurze Entfernung entlang der Längsrichtung X, welche sich zwischen ihnen bei geschlossener Gerätetür 12 einstellt, mittels Induktion elektrische Energie drahtlos vom Gerätekorpus 10 auf die Gerätetür 12 zu übertragen. Dies kann aufgrund der vergleichsweise kurzen Entfernung mittels einfacher technischer Mittel erfolgen, was den Aufwand, die Kosten und den Bauraum entsprechend gering halten kann.

Die Vorderseite (nicht bezeichnet) der Gerätetür 12 weist in der Längsrichtung X dem Innenraum 11 abgewandt bzw. dem Benutzer zugewandt einen drahtlosen Energiesender 16 auf, welcher in der vertikalen Richtung Z unterhalb des drahtlosen Energieempfängers 14 der Gerätetür 12 angeordnet sowie ebenfalls in der Querrichtung Y mittig ausgerichtet ist. In der vertikalen Richtung Z ist der drahtlose Energiesender 16 der Gerätetür 12 etwa auf der Augenhöhe eines durchschnittlichen Erwachsenen angeordnet. Der drahtlose Energieempfänger 14 der Gerätetür 12 ist mittels einer elektrischen Leitung 15 elektrisch leitfähig mit dem drahtlosen Energiesender 16 der Gerätetür 12 verbunden. Die elektrische Leitung 15 verläuft ebenfalls auf der Vorderseite der Gerätetür 12.

Das separate Interaktionselement 2 weist gemäß dem betrachteten Ausführungsbeispiel ein Touch-Display (nicht dargestellt) auf, sodass dem Benutzer auf dem Touch-Display des separaten Interaktionselements 2 Informationen des Einbaukühlschranks 1 wie beispielsweise eine Temperatur des Einbaukühlschranks 1, eine Uhrzeit, ein Datum und dergleichen mittels Zeichen und bzw. oder als grafische Symbole und dergleichen angezeigt werden können. Ferner kann über eingeblendete Bedienelemente des Touch-Displays eine Bedienung des Einbaukühlschranks 1 erfolgen, indem beispielsweise die Temperatur vom Benutzer verändert werden kann.

Das separate Interaktionselement 2 kann, nachdem der Einbaukühlschrank 1 in einem Möbelkorpus einer Küchenzeile (nicht dargestellt) montiert und die Gerätetür 12 des Einbaukühlschranks 1 mit einer beweglichen Möbelfront 3 als bewegliche Verblendung 3 bzw. als bewegliche Küchenfront 3 versehen wurde, auf der Vorderseite der beweglichen Möbelfront 3 in der Längsrichtung X dem drahtlosen Energiesender 16 der Gerätetür 12 gegenüberliegend angeordnet werden. Das separate Interaktionselement 2 kann dabei vorzugsweise mittels eines reversiblen Klebstoffs auf der Vorderseite der beweglichen Möbelfront 3 gehalten werden. Mittels eines drahtlosen Energieempfängers (nicht dargestellt) des separaten Interaktionselements 2 kann das separate Interaktionselement 2 von dem drahtlosen Energiesender 16 der Gerätetür 12 durch die beweglicher Möbelfront 3 hindurch drahtlos mit elektrischer Energie versorgt werden. Die drahtlos empfangene bzw. erhaltene elektrische Energie kann dabei vom separaten Interaktionselement 2 direkt zu dessen Betrieb verwendet und bzw. oder für einen späteren Betrieb gespeichert bzw. gepuffert werden, was mittels eines Kondensators oder eines Akkumulators erfolgen kann. Eine drahtlose Datenübertragung zwischen dem separaten Interaktionselement 2 und einer Steuerungseinheit (nicht dargestellt) des Einbaukühlschranks 1 kann direkt mittels Bluetooth, WiFi oder dergleichen oder indirekt über ein heimisches WLAN-Netzwerk oder auch ein Mobilfunknetz erfolgen.

Hierdurch können dem Benutzer die Möglichkeiten eines derartigen separaten Interaktionselements 2 zur Verfügung gestellt werden, ohne dass die bewegliche Möbelfront 3 hierfür verändert werden muss. Insbesondere sind keine Durchbrüche durch die bewegliche Möbelfront 3 hindurch erforderlich, um eine leitungsgebundene elektrische Energieversorgung zwischen der Gerätetür 12 und dem separaten Interaktionselement 2 herzustellen. Dies gilt ebenso für die Datenübertragung. Dies kann den entsprechenden Aufwand bei der Montage des Einbaukühlschranks 1 am Aufstellungsort vermeiden sowie den optischen Eindruck der beweglichen Möbelfront 3 für den Benutzer verbessern bzw. erhalten.

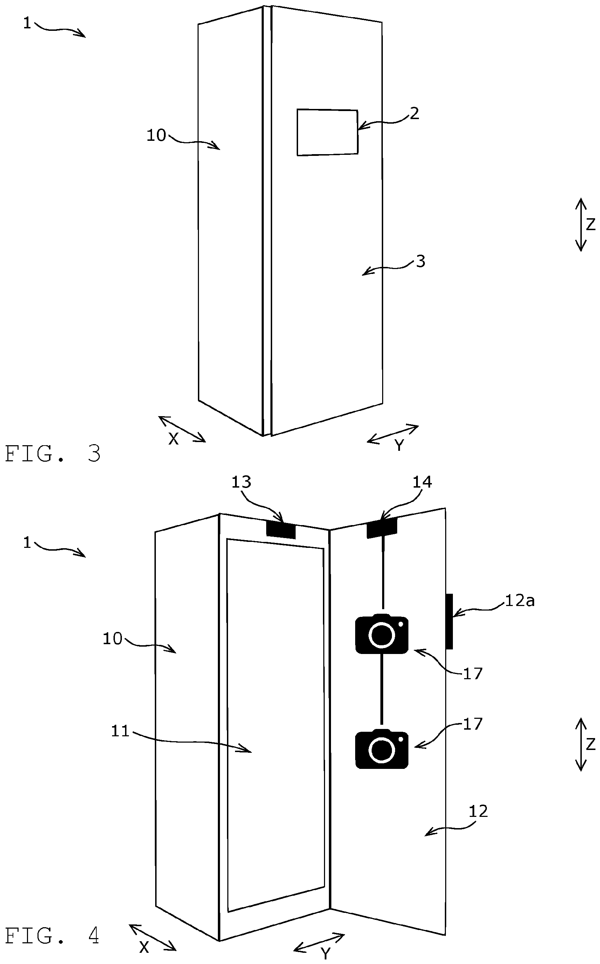

Gemäß des zweiten Ausführungsbeispiels der Figur 4 kann die elektrische Energie, welche wie zuvor beschrieben seitens der Gerätetür 12 zur Verfügung steht, ferner für elektrische bzw. elektronische Funktionen dort genutzt werden, was jeweils ebenfalls direkt oder mittels elektrischer Energiespeicher gepuffert erfolgen kann. Beispielsweise können mehrere Interaktionselemente 17 der Gerätetür 12 in Form von zwei in der vertikalen Richtung Z übereinander sowie unterhalb des drahtlosen Energieempfängers 14 angeordneten und in der Querrichtung Y mittig ausgerichteten optischen Erfassungseinheiten 17 als Kameras 17 auf der Innenseite (nicht bezeichnet) der Gerätetür 12 angeordnet werden, sodass die beiden Kameras 17 bei geschlossener Gerätetür 12 den Innenraum 11 des Einbaukühlschranks 1 möglichst vollständig optisch erfassen können. Hierdurch können Funktionen ermöglicht werden, bei denen der Inhalt des Innenraums 11 des Einbaukühlschranks 1 optisch erfasst und ausgewertet wird, um dem Benutzer beispielsweise auf dem Touch-Display des separaten Interaktionselements 2 Informationen über den Inhalt des Innenraum 11 des Einbaukühlschranks 1 zur Verfügung zu stellen.

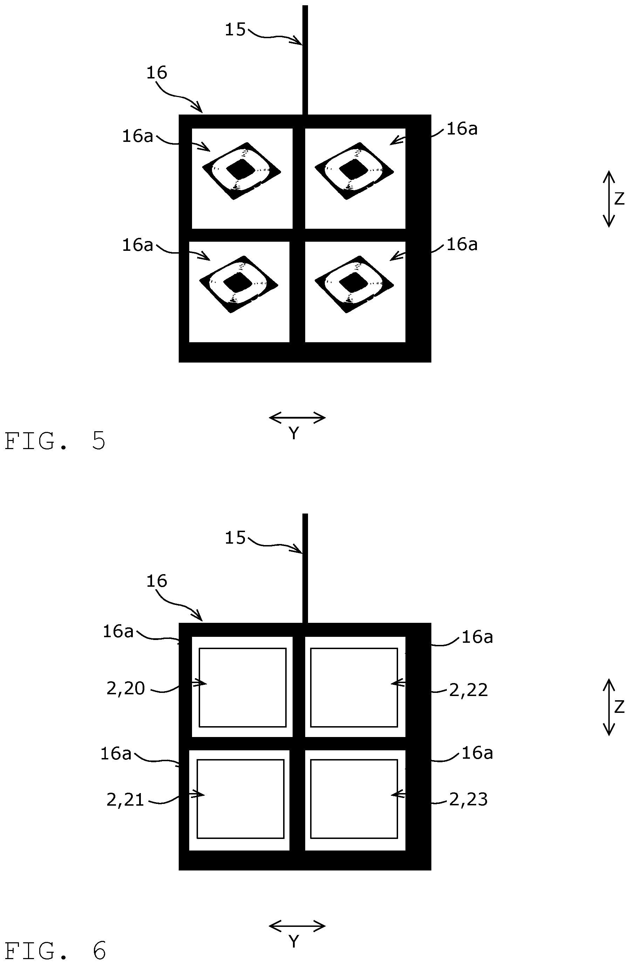

Gemäß jedem der beiden Ausführungsbeispiele kann der drahtlose Energiesender 16 der Gerätetür 12 mehrere einzelne Sendeelemente 16a aufweisen, welche jeweils wie zuvor beschrieben elektrisch gespeist werden sowie drahtlos elektrische Energie durch die bewegliche Möbelfront 3 hindurch aussenden können. Dies kann die Flexibilität für den Benutzer erhöhen, das zuvor beschriebene einzelne separate Interaktionselement 2 anzuordnen, da dies jeweils in der Längsrichtung X direkt einem der vier in der Figur 5 dargestellten Sendeelemente 16a gegenüberliegend erfolgen kann. Entsprechend können mehrere Positionen vorgegeben werden, an welchen das separate Interaktionselement 2 alternativ verwendet werden kann. Dies können beispielsweise auch unterschiedliche Positionen in der vertikalen Richtung Z und somit auf unterschiedlichen Augenhöhen sein.

Alternativ oder zusätzlich können auch mehrere separate Interaktionselemente 2 in Form einer Anzeige 20 bzw. eines Displays 20, welche als Touch-Display dem bereits zuvor beschriebenen Touch-Display entsprechen kann, eines Lautsprechers 21, eines Mikrofons 22 und bzw. oder eines Leuchtmittels 23 einzelnen verwendet und jeweils einem der Sendeelemente 16a gegenüberliegend an der Vorderseite der bewegliche Möbelfront 3 befestigt werden. Hierdurch können die jeweiligen Funktionen dem Benutzer zur Verfügung gestellt werden. Durch eine entsprechende Vielzahl von Sendeelementen 16a können auch diese mehreren separaten Interaktionselement 2 flexibel angeordnet und verwendet werden. Dies kann die Flexibilität der Nutzung für den Benutzer weiter erhöhen.

Gemäß einem dritten, nicht dargestellten Ausführungsbeispiel der vorliegenden Erfindung kann der drahtlose Energiesender 13 des Gerätekorpus 10 durch geeignete Technik der drahtlosen Energieübertragung ausgebildet sein, direkt drahtlos elektrische Energie zum separaten Interaktionselement 2 bzw. dessen drahtlosen Energieempfänger zu übertragen. Entsprechend kann auf die zuvor beschriebenen Elemente der Gerätetür 12 verzichtet werden. Eine hierfür ausreichende Reichweite sowie ein entsprechender großer Winkelbereich kann beispielsweise durch eine induktive Kopplung mit zwei resonanten hoch-effizienten Resonanzschwingkreisen erreicht werden. Dies kann die Flexibilität der Anordnung des separaten Interaktionselements 2 für den Benutzer erhöhen, da das separate Interaktionselement 2 nun beliebig auf der Vorderseite der beweglichen Möbelfront 3 angeordnet sowie diese Positionierung auch verändert werden kann. Dies gilt entsprechend auch für mehrere separate Interaktionselemente 2, wie zuvor beschrieben.

### Bezugszeichenliste (Bestandteil der Beschreibung)

- X: Längsrichtung; Tiefe; Länge
- Y: Querrichtung; Breite
- Z: vertikale Richtung; Höhe
- X, Y: Horizontale; horizontale Ebene

- 1, 2: Einbauhaushaltsgerätesystem

- 1: Einbauhaushaltsgerät; Einbauküchengerät; Einbaukühlgerät; Einbaukühlschrank
- 10: Gerätekorpus
- 11: Innenraum
- 12: Geräteverschluss; Gerätetür
- 12a: Verschlussgriff; Türgriff
- 13: drahtloser Energiesender des Gerätekorpus 10
- 14: drahtloser Energieempfänger des Geräteverschlusses 12
- 15: elektrische Leitung des Geräteverschlusses 12
- 16: drahtloser Energiesender des Geräteverschlusses 12
- 16a: Sendeelemente des drahtlosen Energiesenders 16 des Geräteverschlusses 12
- 17: Interaktionselement; optische Erfassungseinheit; Kamera

- 2: separate Interaktionselemente
- 20: Anzeige bzw. (Touch-)Display
- 21: Lautsprecher
- 22: Mikrophon
- 23: Leuchtmittel

- 3: bewegliche Möbelfront; bewegliche Küchenfront; bewegliche Verblendung

## Patentansprüche

1. Einbauhaushaltsgerätesystem (1, 2)
mit einem Einbauhaushaltsgerät (1)
mit einem Gerätekorpus (10) mit einem Innenraum (11),
wobei der Gerätekorpus (10) einen drahtlosen Energiesender (13) aufweist, welcher ausgebildet ist, elektrische Energie drahtlos zu einem separaten Interaktionselement (2) hin auszusenden, und
mit einem Geräteverschluss (12), welcher ausgebildet ist, den Innenraum (11) zu verschließen,
wobei der Geräteverschluss (12) ausgebildet ist, von einer beweglichen Möbelfront (3) verblendet zu werden, und
mit wenigstens dem separaten Interaktionselement (2), welches ausgebildet, mit einem Benutzer zu interagieren,
wobei das separate Interaktionselement (2) ferner ausgebildet ist, dem Geräteverschluss (12) abgewandt auf der beweglichen Möbelfront (3), vorzugsweise magnetisch oder stoffschlüssig, besonders vorzugsweise reversibel stoffschlüssig, befestigt zu werden und
wobei das separate Interaktionselement (2) ferner ausgebildet ist, die ausgesendete elektrische Energie des drahtlosen Energiesenders (13) des Gerätekorpus (10) drahtlos zu empfangen und hiermit betrieben zu werden.

2. Einbauhaushaltsgerätesystem (1, 2) nach Anspruch 1,
wobei das separate Interaktionselement (2) ausgebildet ist, senkrecht zur Ebene der beweglichen Möbelfront (3) dem drahtlosen Energiesender (13) des Gerätekorpus (10) direkt gegenüberliegend auf der beweglichen Möbelfront (3) befestigt zu werden.

3. Einbauhaushaltsgerätesystem (1, 2) nach Anspruch 1,
wobei das separate Interaktionselement (2) ausgebildet ist, in der Ebene der Möbelfront (3) gegenüber dem drahtlosen Energiesender (13) des Gerätekorpus (10) versetzt auf der beweglichen Möbelfront (3) befestigt zu werden.

4. Einbauhaushaltsgerätesystem (1, 2) nach einem der Ansprüche 1 bis 3,
wobei die drahtlose Energieübertragung zwischen dem drahtlosen Energiesender (13) des Gerätekorpus (10) und dem separaten Interaktionselement (2) mittels Induktion, vorzugsweise mittels eines resonanten Schwingkreises, erfolgt.

5. Einbauhaushaltsgerätesystem (1, 2) nach einem der vorangehenden Ansprüche,
wobei der Geräteverschluss (12) wenigstens ein Interaktionselement (17), vorzugsweise eine optische Erfassungseinheit (17), besonders vorzugsweise wenigstens eine Kamera (17), aufweist, welches bei geschlossenem Geräteverschluss (12) auf den Innenraum (11) gerichtet ist,
wobei das Interaktionselement (17) des Geräteverschlusses (12) ausgebildet ist, die ausgesendete elektrische Energie des drahtlosen Energiesenders (13) des Gerätekorpus (10) drahtlos zu empfangen und hiermit betrieben zu werden.

6. Einbauhaushaltsgerätesystem (1, 2)
mit einem Einbauhaushaltsgerät (1)
mit einem Gerätekorpus (10) mit einem Innenraum (11),
wobei der Gerätekorpus (10) einen drahtlosen Energiesender (13) aufweist, welcher ausgebildet ist, elektrische Energie drahtlos zu einem drahtlosen Energieempfänger (14) eines Geräteverschlusses (12) hin auszusenden,
mit dem Geräteverschluss (12), welcher ausgebildet ist, den Innenraum (11) zu verschließen,
wobei der Geräteverschluss (12) ausgebildet ist, von einer beweglichen Möbelfront (3) verblendet zu werden,
wobei der Geräteverschluss (12) den drahtlosen Energieempfänger (14) aufweist, welcher ausgebildet ist, die ausgesendete elektrische Energie des drahtlosen Energiesenders (13) des Gerätekorpus (10) drahtlos zu empfangen, und
wobei der Geräteverschluss (12) einen drahtlosen Energiesender (16), vorzugsweise mit mehreren Sendeelementen (16a), aufweist, welcher ausgebildet ist, elektrische Energie zu einem separaten Interaktionselement (2) hin drahtlos auszusenden,
wobei vorzugsweise der drahtlose Energieempfänger (14) und der drahtlose Energiesender (16) mit einer elektrischen Leitung (15) miteinander verbunden sind, und
mit wenigstens dem separaten Interaktionselement (2), welches ausgebildet, mit einem Benutzer zu interagieren,
wobei das separate Interaktionselement (2) ferner ausgebildet ist, dem Geräteverschluss (12) abgewandt auf der beweglichen Möbelfront (3), vorzugsweise magnetisch oder stoffschlüssig, besonders vorzugsweise reversibel stoffschlüssig, befestigt zu werden und
wobei das separate Interaktionselement (2) ferner ausgebildet ist, die ausgesendete elektrische Energie des drahtlosen Energiesenders (16), vorzugsweise genau eines der Sendeelemente (16a) des drahtlosen Energiesenders (16), des Geräteverschlusses (12) drahtlos zu empfangen und hiermit betrieben zu werden.

7. Einbauhaushaltsgerätesystem (1, 2) nach Anspruch 6,
wobei das separate Interaktionselement (2) ausgebildet ist, senkrecht zur Ebene der beweglichen Möbelfront (3) dem drahtlosen Energiesender (16), vorzugsweise genau einem der Sendeelemente (16a) des drahtlosen Energiesenders (16), des Geräteverschlusses (12) direkt gegenüberliegend auf der beweglichen Möbelfront (3) befestigt zu werden.

8. Einbauhaushaltsgerätesystem (1, 2) nach Anspruch 6,
wobei das separate Interaktionselement (2) ausgebildet ist, in der Ebene der beweglichen Möbelfront (3) gegenüber dem drahtlosen Energiesender (16) des Geräteverschlusses (12) versetzt auf der beweglichen Möbelfront (3) befestigt zu werden.

9. Einbauhaushaltsgerätesystem (1, 2) nach einem der Ansprüche 6 bis 8,
wobei die drahtlose Energieübertragung zwischen dem drahtlosen Energiesender (16) des Geräteverschlusses (12) und dem separaten Interaktionselement (2) mittels Induktion, vorzugsweise mittels eines resonanten Schwingkreises, erfolgt.

10. Einbauhaushaltsgerätesystem (1, 2) nach einem der Ansprüche 6 bis 9,
wobei der Geräteverschluss (12) wenigstens ein Interaktionselement (17), vorzugsweise eine optische Erfassungseinheit (17), besonders vorzugsweise wenigstens eine Kamera (17), aufweist, welches bei geschlossenem Geräteverschluss (12) auf den Innenraum (11) gerichtet ist,
wobei das Interaktionselement (17) des Geräteverschlusses (12) ausgebildet ist, die ausgesendete elektrische Energie des drahtlosen Energieempfängers (14) des Geräteverschlusses (12) drahtlos zu empfangen und hiermit betrieben zu werden.

11. Einbauhaushaltsgerätesystem (1, 2) nach einem der vorangehenden Ansprüche,
wobei das separate Interaktionselement (2) und/oder das Interaktionselement (17) des Geräteverschlusses (12) ausgebildet ist/sind, mittels drahtlos empfangener elektrischer Energie ausschließlich bei geschlossenem Geräteverschluss (12) betrieben zu werden oder
wobei das separate Interaktionselement (2) und/oder das Interaktionselement (17) des Geräteverschlusses (12) ausgebildet ist/sind, mittels drahtlos empfangener elektrischer Energie eines elektrischen Energiespeichers, vorzugsweise des separaten Interaktionselements (2), des Interaktionselements (17) des Geräteverschlusses (12) und/oder des Geräteverschlusses (12), bei geöffnetem Geräteverschluss (12) betrieben zu werden.

12. Einbauhaushaltsgerätesystem (1, 2) nach einem der vorangehenden Ansprüche,
wobei das separate Interaktionselement (2)
eine Anzeige (20), vorzugsweise ein Touch-Display (20),
ein Bedienelement,
einen Lautsprecher (21),
ein Mikrophon (22),
ein Leuchtmittel (23) und/oder
eine optische Erfassungseinheit, vorzugsweise eine Kamera,
aufweist.

13. Einbauhaushaltsgerätesystem (1, 2) nach einem der vorangehenden Ansprüche,
wobei das separate Interaktionselement (2) und das Einbauhaushaltsgerät (1) ausgebildet sind, direkt oder indirekt drahtlos miteinander zu kommunizieren.

14. Separates Interaktionselement (2) zur Verwendung in einem Einbauhaushaltsgerätesystem (1, 2) nach einem der Ansprüche 1 bis 13.

15. Einbauhaushaltsgerät (1) zur Verwendung in einem Einbauhaushaltsgerätesystem (1, 2) nach einem der Ansprüche 1 bis 13.
